**Europäisches Patentamt**

**European Patent Office**

**Office européen des brevets**

(19)

(11) Veröffentlichungsnummer: **0 043 087**
A2

(12) ## EUROPÄISCHE PATENTANMELDUNG

(21) Anmeldenummer: **81104849.5**

(22) Anmeldetag: **23.06.81**

(51) Int. Cl.³: **B 62 B 7/08**

(30) Priorität: **28.06.80 DE 3024412**

(43) Veröffentlichungstag der Anmeldung:
**06.01.82 Patentblatt 82/1**

(84) Benannte Vertragsstaaten:
**AT BE CH FR GB IT LI NL SE**

(71) Anmelder: **Möcking, Hermann**
**Bandelstrasse 15**
**D-4800 Bielefeld 1(DE)**

(72) Erfinder: **Möcking, Hermann**
**Bandelstrasse 15**
**D-4800 Bielefeld 1(DE)**

(74) Vertreter: **Elbertzhagen, Otto et al,**
**Patentanwälte Thielking & Elbertzhagen Gadderbaumer**
**Strasse 20**
**D-4800 Bielefeld 1(DE)**

(54) **Faltsitz.**

(57) Ein Faltsitz mit einem zusammenklappbaren Gestell, wie er insbesondere bei einem Faltkinderwagen Verwendung findet, besteht im wesentlichen aus vier gelenkig verbundenen Stützen (1) wobei die Stützen (1) in zusammengeklappter Stellung etwa parallel nebeneinander liegen und in aufgeklappter Lage etwa längs der Kanten eines Pyramidenstumpfes verlaufen. Bei einem solchen Faltsitz soll der Sitzkomfort verbessert werden, ohne daß die Faltbarkeit dadurch beeinträchtigt werden soll. Dazu sind die Stützen (1) mit ihren Oberenden an einem zentralen Ringelement (3) angelenkt sowie über Spreizstangen (17) mit einer koaxial zum Ringelement (3) angeordneten Strebe (7) an oder nahe deren Unterende verbunden. Am Oberende der Strebe (7) ist ein Fächer (14) aus federnden und/oder gefederten Lamellen (15) mit seinem Spreizzentrum angelenkt. In ausgeklappter Lage ist der Fächer (14) etwa parallel zur Ebene des Ringelementes (3) gespreizt und seine Lamellen (15) stützen sich auf dem Ringelement (3) ab. In zusammengeklappter Lage sind die Lamellen (15) des Fächers (14) durch das Ringelement (3) hindurchgezogen und davon in einer zur Ebene des Ringelementes (3) etwa senkrechten Stellung gebündelt gehalten.

Fig.1

EP 0 043 087 A2

Faltsitz

Die Erfindung bezieht sich auf einen Faltsitz der im Gattungsbegriff des Patentanspruchs 1 näher bezeichneten Art. Insbesondere ist ein solcher Faltsitz zur Verwendung bei einem Faltkinderwagen geeignet.

Bekannte Faltkinderwagen besitzen ein Gestell, bei dem in ausgeklappter Lage die Griffstangen geradlinig in die vorderen Stützen des Fahrgestells übergehen, während die hinteren Stützen des Fahrgestells etwa in der Mitte der äußeren, einklappbaren Abschnitte der Griffstangen angelenkt sind, wobei in der ausgeklappten Lage die hinteren Stützen und die Griffstangen von den vorderen Rädern ausgehend schräg nach oben und hinten geneigt sind. Das Gestell solcher Kinderwagen besitzt keine Sitz- und Lehnenflächen, vielmehr ist an das Stütz- und Griffgestänge ein Segeltuchsack angehängt, der völlig ungefedert ist. Da auch der Segeltuchsack selbst kaum Federungseigenschaften besitzt, übertragen sich die Fahrwerksstöße unmittelbar auf das im Faltkinderwagen transportierte Kind. Das trifft auch für solche Faltkinderwagen zu, bei denen in den Segeltuchsack brettartige Einlagen eingenäht sind, um eine steifere Sitz- und/oder Lehnfläche zu bilden.

Der Erfindung liegt daher die Aufgabe zugrunde,

einen Faltsitz insbesondere zur Verwendung bei einem Faltkinderwagen zu schaffen, der einen erhöhten Sitzkomfort bietet, indem durch das Gestell selbst zumindest eine feste, gefederte Sitzfläche in der ausgeklappten Lage gebildet ist, wobei diese gefederte Sitzfläche in der zusammengeklappten Lage des Gestells eine raumsparende Anordnung einnehmen soll.

Diese Aufgabe wird bei einem Faltsitz der gattungsgemäßen Art durch die kennzeichnenden Merkmale des Anspruchs 1 gelöst.

Der besondere Vorteil eines erfindungsgemäßen Faltsitzes liegt darin, daß die federnden oder gefederten Lamellen des Gestells eine ausreichend große Sitzfläche bilden, der leicht eine solche Elastizität gegeben werden kann, daß über das Gestell übertragene Stöße in einem zumindest erheblich gedämpften Umfange lediglich noch auf die auf der Sitzfläche sitzende Person übertragen werden. Dazu können die Lamellen selbst als Federelemente ausgebildet sein, wobei eine entsprechende, überkragende Lagerung auf dem Ringelement des Gestells vorgesehen werden muß, damit sich zumindest im Bereich der über das Ringelement überstehenden Lamellenabschnitte, die den größten Teil der Sitzfläche bilden, ein ausreichender Federweg ergibt. Es können auch auf dem die fächerartig gespreizten Lamellen in der horizontalen Gebrauchslage stützenden Ringelement Federelemente aufgebaut sein, die für eine Elastizität des Sitzes sorgen. Auch das Spreizzentrum des Lamellenfächers kann federnd gelagert sein, dazu ist es vorteilhaft, die den Sitzfächer stützenden Streben teleskopisch mit einem Federelement auszubilden. In Ergänzung der gefederten Sitzfläche des
Gestells kann auch eine federnde Rückenlehne
aus einem Lamellenpaket vorgesehen werden.

Insbesondere bei Verwendung für einen Faltkinderwagen liegt ein weiterer Vorteil des
erfindungsgemäßen Faltsitzes darin, daß durch
die gefederte Sitzfläche und die gegebenenfalls
vorhandene gefederte Lehnenfläche die Faltbarkeit
nicht beeinträchtigt wird. Dazu sind die das
Fahrgestell bildenden Stützen des Kinderwagens,
das Ringelement und die darin zentral angeordnete Strebe nach Art eines Schirmgestänges aufgebaut, dessen Teile sich in zusammengeklappter
Anordnung parallel nebeneinander legen. Dabei
wird das Spreizzentrum des Lamellenfächers durch
das Ringelement hindurchgezogen, das zunächst in
ausgeklappter Lage etwa in Höhe der Ebene dieses
Ringelementes liegt. Die Lamellen werden dadurch
gebündelt und das Lamellenbündel nimmt eine
etwa koaxiale Lage zu der Strebe ein, mit deren
Oberende die Fächerlamellen verbunden sind. Auf
die sich dabei ergebende Länge der Strebe einschließlich des Lamellenbündels sind die übrigen
Elemente des Kinderwagengestells in ihrer Länge
abgestimmt, wozu insbesondere die Stützen und
die Abschnitte des umlegbaren Griffgestänges gehören, die sich in etwa gleicher Länge parallel
so neben die Strebe einschließlich des Lamellenbündels legen, daß sich für diese Teile eine
einheitliche Gesamtlänge ergibt.

Die durch die Länge der zentralen Strebe des
Fahrwerks einschließlich des damit fluchtend angeordneten Lamellenbündels vorgegebene Gesamtlänge des zusammengefalteten Kinderwagengestells
wird auch dann nicht überschritten, wenn noch weiteres Zubehör, insbesondere am Griffgestänge angeordnet ist. Hier kann vorteilhafterweise die Rückenlehne so umklappbar gestaltet sein, daß in der zusammengefalteten Anordnung des Gestells ein Überstand an einer der Stirnseiten der parallel nebeneinanderliegenden Gestellelemente vermieden ist. Das gleiche wird auch für gegebenenfalls vorhandene Armlehnen vorgesehen, die vorzugsweise klappbar an den äußeren Abschnitten der Griffstangen angeordnet sind.

Es versteht sich, daß die aus federnden Lamellen gebildete Sitzfläche und Rückenlehne durch eine Textilbespannung verkleidet sein können, die zweckmäßig so ausgebildet ist, daß sie sich beim Zusammenfalten des Kinderwagengestells raumsparend zusammenlegt. Insbesondere kann bei der durch den Fächer gebildeten Sitzfläche jede einzelne Lamelle bespannt sein, es können mehrere Lamellen durch eine Bespannung verbunden sein, schließlich können auch sämtliche Lamellen untereinander durch eine Bespannung kaschiert sein, wobei in jedem Falle die Bespannung bei der Bündelung der Fächerlamellen mit durch das Ringelement hindruchtritt, das sich beim Zusammenlegen des Faltgestells vom Befestigungsende der Lamellen aus über diese hinwegschiebt. Entscheidend ist die Relativbewegung, die zwischen dem Ringelement und den Fächerlamellen stattfindet, weswegen es gleichwertig ist zu sagen, daß beim Zusammenlegen des Faltgestells die Lamellen durch das Ringelement nach unten hindurchgezogen werden.

Die weiteren Vorteile des erfindungsgemäßen Faltsitzes ergeben sich aus den Unteransprüchen und aus der nachfolgenden Beschreibung.

Die Erfindung wird nachstehend anhand der Zeichnung an einem Ausführungsbeispiel noch näher erläutert. Dabei zeigen:

Fig. 1 die Vorderansicht des Gestells eines Faltkinderwagens mit einem erfindungsgemäßen Faltsitz,

Fig. 2 die Seitansicht des Kinderwagengestells nach Fig. 1,

Fig. 3 eine der Fig. 2 entsprechende Seitansicht des Sitzelementes des Kinderwagengestells in zusammengefalteter Anordnung,

Fig. 4 in vergrößerter Darstellung eine teilgeschnittene Stirnansicht der Halterung für die faltbare Sitzfläche des Kinderwagengestells,

Fig. 5 in Seitansicht die Halterung einer einzelnen Sitzflächenlamelle und

Fig. 6 die Draufsicht auf die Halterung der Sitzflächenlamellen.

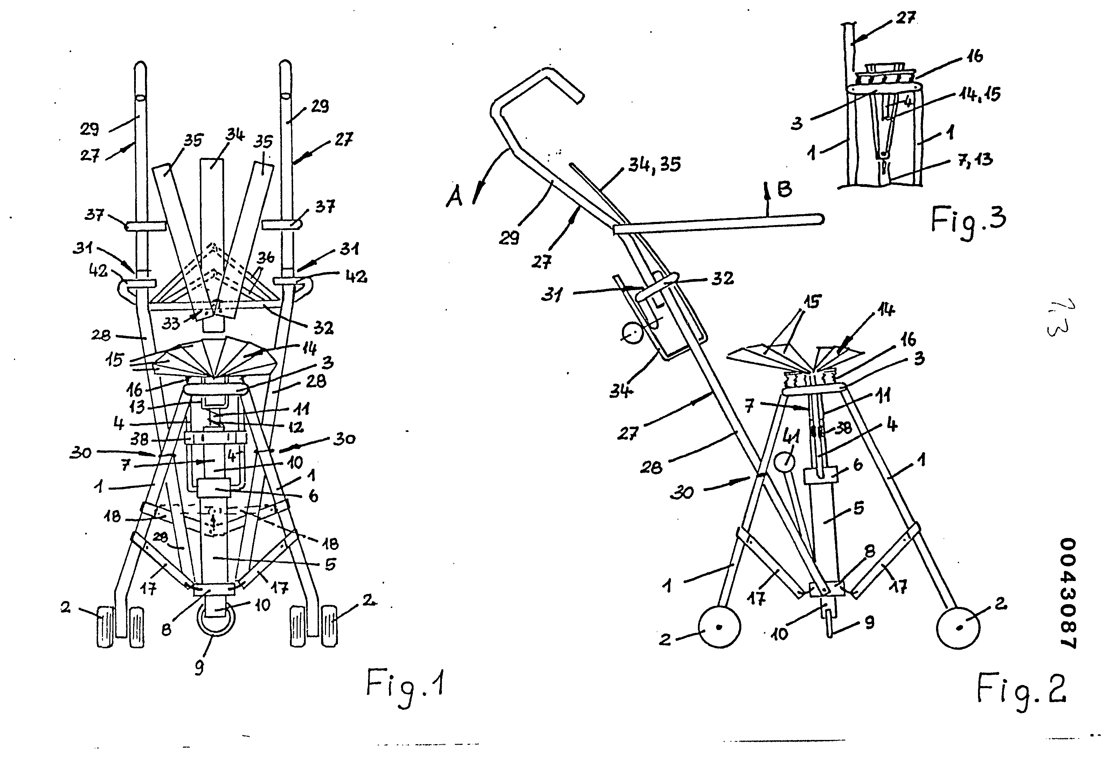

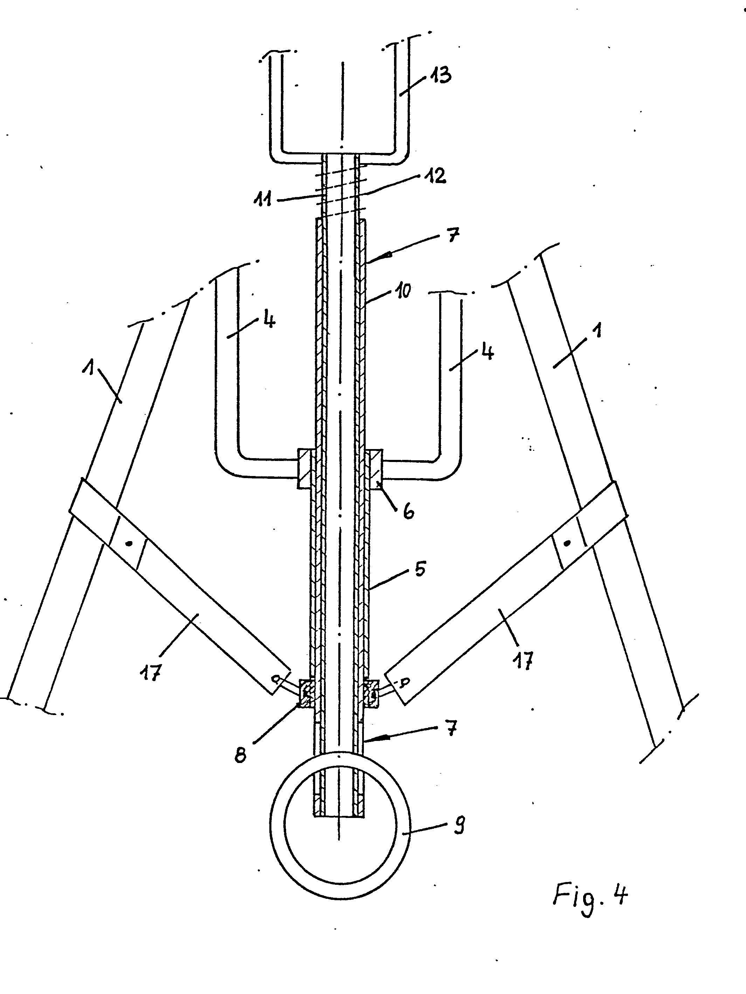

Die Figuren 1 und 2 zeigen den grundsätzlichen Aufbau eines Gestells eines Faltkinderwagens, das ein vierrädriges Fahrwerk besitzt. Im wesentlichen ist das Fahrwerk aus vier Stützen 1 gebildet, an deren Füße Räder oder Radsätze 2 angeordnet sind. In Fahrtrichtung gesehen liegen zwei Stützen 1 als vordere Stützen nebeneinander, während die beiden übrigen Stützen 1 als hintere Stützen nebeneinander angeordnet sind. In ausgeklappter Stellung liegen dabei die Räder 2 in den Eckpunkten eines Quadrates oder Rechteckes, wobei - wie Figur 1 zeigt - die jeweils rechten und jeweils linken Stützen 1 fluchtend in Fahrtrichtung hintereinander liegen, während - wie Figur 2 wiedergibt - die vorderen Stützen 1 und die hinteren Stützen 1 quer zur Fahrtrichtung miteinander in ausgeklappter Stellung des Gestells fluchten.

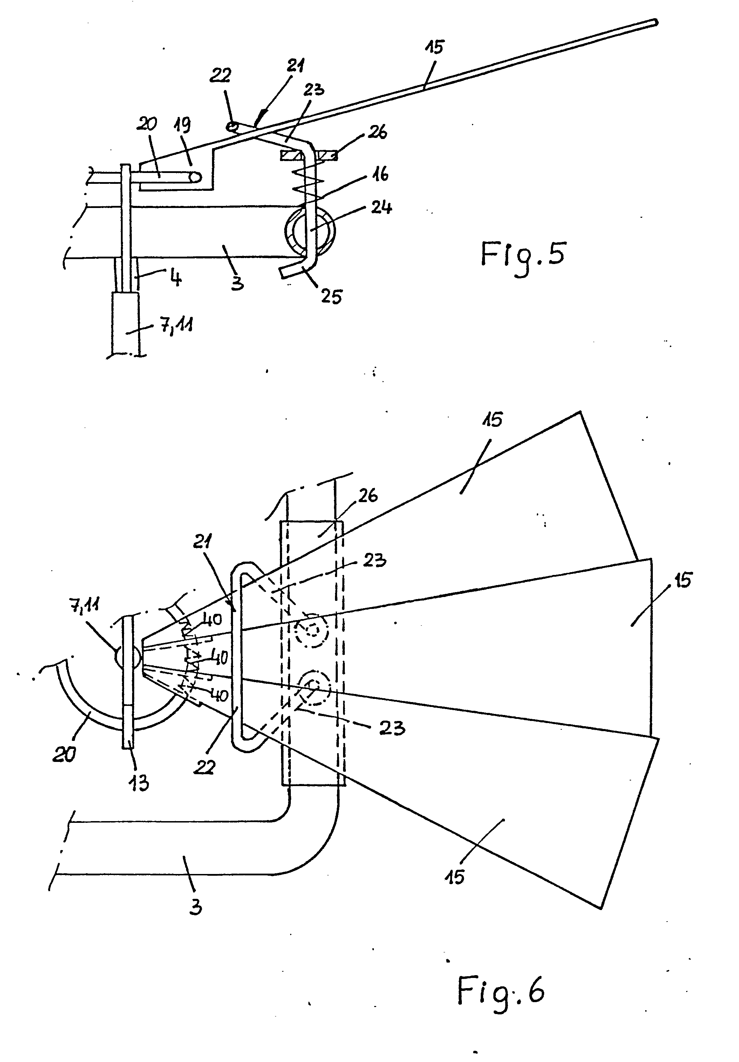

Die Stützen 1 sind mit ihren Oberenden an einem Ringelement 3 angelenkt. Wie beispielhaft in Figur 6 angedeutet ist, kann das Ringelement 3 eine quadratische Grundform besitzen. In diesem Fall sind die Stützen 1 zweckmässig nahe der Ecken dieser quadratischen Grundform am Ringelement 3 gelagert. Die Stützen 1 sind derart an dem Ringelement 3 befestigt, daß sie sich im wesentlichen lediglich in einer in Fahrtrichtung des Wagens liegenden Ebene bewegen können. Dadurch soll insbesondere vermieden sein, daß das Gestell in ausgeklappter Anordnung seitlich wegklappen kann. Zur Förderung der gewünschten Seitenstabilität trägt aber auch bei, daß, wie die Figuren 1 und 2 veranschaulichen, die Stützen 1 in ausgeklappter Stellung des Gestells vom Ringelement 3 aus gesehen in ihrem Verlauf nach unten nach außen hin geneigt sind. Die theoretischen Verlängerungen der Stützen 1 nach oben hin über das Ringelement 3 hinaus würden in ausgeklappter Stellung des Gestells in einem Punkt zusammenlaufen. Die Stützen 1 mit dem Ringelement 3 stellen die wesentlichen Tragsäulen des Fahrwerks dar.

Das Ringelement 3 ist nach unten hin über Stützstreben 4 mit einer Führungshülse 5 verbunden, die koaxial zu der Vertikalachse liegt, die senkrecht durch das Zentrum der von dem Ringelement 3 aufgespannten Ebene hindurchgeht. Um diese Achse herum sind die das Ringelement 3 mit der Führungshülse 5 verbindenden Stützstreben 4 gleichmässig verteilt, beim Ausführungsbeispiel liegen sich zwei solche Stützstreben 4 diametral zu der Vertikalachse einander gegenüber. Oberseitig besitzt die Führungshülse 5 beispielhaft einen aufgesetzten, radial vorstehenden Ring 6, in den die Stützstreben 4 mit Abkröpfungen eingesteckt sind. Entscheidend hierbei ist, daß das Ringelement 3 mit der Führungshülse 5 fest verbunden ist, damit sich beim Zusammenklappen oder Auseinanderfalten des Kinderwagengestells die relative Zuordnung dieser beiden Teile nicht ändert.

Durch die Führungshülsen 5 ist eine Strebe 7 verschieblich hindurchgeführt, die sowohl nach unten als auch nach oben über die Führungshülse 5 hinausragt. Unterseitig ist an die Strebe 7 eine Öse 9 angearbeitet, in die man beispielsweise beim Zusammenfalten oder Auseinanderklappen des Kinderwagengestells mit der Fußspitze hineintreten kann, um insbesondere die Stützen 1 und die damit gelenkig verbundenen Elemente des Gestells spreizen oder zusammenklappen zu können. Nahe ihrem Unterende besitzt die Strebe 7 einen radial aufgesetzten Vorsprung 8 in Gestalt eines in Umfangsrichtung verlaufenden Ringes, der in ausgeklappter Stellung des Gestells an die untere Stirnseite der Führungshülse 5 anschlägt.

Zweckmässig besteht die innere Strebe 7, die zentral
zum Fahrwerk des Kinderwagengestells liegt, aus
zwei teleskopisch zueinander verschieblichen
Teilen 10 und 11, die sich gegeneinander über ein
Federelement 12 abstützen. An das Oberende des
inneren Teleskopteils 11 der Strebe 7 ist ein
U-Bügel 13 angesetzt, der mit seinen U-Streben
nach oben durch das Ringelement 3 hindurchragt und
einen aus Lamellen 15 gebildeten Fächer 14 trägt.

Weitere Einzelheiten der zentralen Strebe 7 sind
in Figur 4 dargestellt. Das äußere Teil 10 und das
innere Teil 11 des Teleskopstrebe 7 sind vorzugsweise als Teleskoprohre ausgebildet. Das äußere
Teleskoprohr 10 ist in der Führungshülse 5, die
das Ringelement 3 stützt, verschieblich gelagert.
Mit dem äußeren Teleskoprohr ist der ringartige,
radiale Vorsprung 8 fest verbunden, hingegen kann
die am Unterende der Strebe 7 angeordnete Öse 9
entweder mit dem äußeren Teleskopteil 10 und
mit dem inneren Telskopteil 11 verbunden sein, wobei
wichtig ist, daß durch die Anordnung der Öse 9
die Relativverschieblichkeit des inneren Teleskopteils 11 gegenüber dem äußeren Teleskopteil 10
nicht beeinträchtigt wird. Das Federelement 12
zur Abstützung des inneren Teleskopteils 11, das den
Lamellenfächer 15 trägt, gegenüber dem äußeren
Teleskopteil 10 der Strebe 7 ist in Gestalt einer
als Druckfeder wirkenden Schraubenfeder 12
zwischen der oberen Stirnseite des äußeren Teleskopteils 10 und dem U-Bügel 13 auf dem inneren
Teleskopteil 11 angeordnet. Das Federelement 12 hält
das innere Teleskopteil 11 aufgrund seiner Federkraft in einer maximal gegenüber dem äußeren Teleskopteil 10 ausgezogenen Stellung, so daß also das innere Teleskopteil 11 über den U-Bügel 13 gegen die Kraft des Federelementes 12 in das äußere Teleskopteil 10 der Strebe 7 eingedrückt werden kann. Dadurch ergibt sich eine federnde Auflagerung des Lamellenfächers 15, der an oder in seinem Zentrum mit dem U-Bügel 13 befestigt ist, wie nachstehend noch näher erläutert werden wird.

Die Stützen 1 des Fahrgestells sind ebenfalls mit der inneren Strebe 7 verbunden. Dazu sind am radialen Vorsprung 8 der Stütze 7 Spreizstangen 17 angelenkt, die etwa auf ein Drittel Höhe an den Stützen 1 gelenkig befestigt sind, Die Stützen 1 mit dem oberen Ringelement 3 und mit den Spreizstangen 17, die am radialen Vorsprung 8 der Strebe 7 zusammengeführt sind, ähneln dem Aufbau eines Schirmgestänges. Wird der Abstand des radialen Vorsprunges 8 an der Strebe 7 gegenüber dem Ringelement 3 vergrößert, legen sich die Stützen 1 mit den Spreizstreben 17 zusammen und nehmen zueinander eine etwa parallele Anordnung ein, in deren Zentrum die Strebe 7 liegt. Die Strebe 7 verändert dabei unter Mitnahme durch den radialen Vorsprung 8 ihre Lage gegenüber dem Ringelement 3 nach unten und zieht den an ihrem Oberende festgemachten Fächer 14 mit, der sich somit durch das Ringelement 3 hindurchbewegen muß. Der Fächer 14 mit seinen Lamellen 15 ist nun so ausgebildet, daß sich bei dieser Bewegung die Lamellen zu einem Bündel zusammenlegen, wie es in Figur 3 angedeutet ist. Dieses Bündel liegt in der zusammengeklappten Anordnung koaxial mit der Strebe 7. Beim Ausklappen der Stützen 1 wird unter Mitnahme durch die Spreizstangen 17 der radiale Vorsprung 8 an der Strebe 7 nach oben mitgenommen, folglich bewegt sich die Strebe 7 gegenüber dem Ringelement 3 nach oben, und es ist an der Oberseite
des Ringelements 3 für die Lamellen 15 des Fächers
14 eine solche Gegenhalterung angebracht, daß der
Fächer 15 in einer horizontalen, zur Ebene des
Ringelementes 3 parallelen Ebene des Ringelementes 3
herausgetreten ist. Die Relativverschieblichkeit
der Strebe 7 nach oben wird durch den Anschlag des
radialen Vorsprunges 8 an der unteren Stirnseite
der Führungshülse 5 begrenzt. Dadurch wird der
Fächer 15 in der horizontal gespreizten Lage
festgehalten. Gegen ein unbeabsichtigtes Einklappen der Stützen 1 und damit des Sitzfächers 15
kann ebenfalls Vorsorge getroffen sein. Dazu ist
zumindest an den beiden rückwärtigen Stützen 1
eine gelenkige Querstrebe 18 vorgesehen, die in völlig ausgeklappter Lage des Gestells sich mit ihren
gelenkig verbundenen Hälften geradlinig ausrichtet
und zum Zusammenklappen des Kinderwagengestells
durch eine bewußte Handhabung eingeknickt werden
muß.

Einzelheiten der spreizbaren Sitzfläche, die durch
den Fächer 14 gebildet ist, zeigen die Figuren
5 und 6. Die einzelnen Lamellen 15 des Fächers 14
bestehen aus schmalen trapezförmigen Streifen,
die entweder aus Blech oder aus Kunststoff
hergestellt sein können. In gespreizter Anordnung
stoßen die Lamellen 15 entweder lückenlos aneinander oder überlappen sich noch geringfügig. Ihr
Innenende ist als vertikaler Lappen 19 ausgebildet, durch den ein Ring 20 hindurchtritt, der
durch die Oberenden des mit der Strebe 7 verbundenen U-Bügels 13 gehalten wird. Die Lamellen
15 sind also mit ihren Lappen 19 auf dem Ring 20 aufgereiht, zur Unterstützung des gewünschten Spreizeffektes sitzen auf dem Ring 20 zwischen den einzelnen Lappen 19 der Lamellen 15 Druckfedern 40 , die ein ungewünschtes Zusammenschieben der Lamellen 15 im Spreizzentrum des Fächers 14 verhindern.

Auf dem Ringelement 3 sind nach oben überstehend mehrere Bügel 21 aufgelagert, die jeweils einen zur Ebene des Ringelementes 3 parallelen Abschnitt 22 besitzen, unter dem die Lamellen 15 des Fächers 14 hindurchgesteckt sind. Dieser Abschnitt 22 der Bügel 21 liegt zweckmässig gegenüber dem Ringelement 3 etwas nach innen zum Zentrum, in dem die Strebe 7 angeordnet ist, versetzt. Die horizontal verlaufenden Bügelabschnitte 22 dienen als Gegenhaltung für die Lamellen 15 beim Ausklappen des Gestells. Sie zwingen bei der Aufwärtsbewegung der Strebe 7 gegenüber dem Ringelement 3 die Lamellen dazu, sich etwa parallel zur Ebene des Ringelementes 3 auszurichten. Andererseits ist der Überstand der Bügelabschnitte 22 nach innen gegenüber dem Ringelement 3 so bemessen, daß in der Vertikalprojektion gesehen der Abstand zu den Befestigungspunkten der Lamellen 15 am Ring 20 möglichst gering ist, damit die Lamellen 15 in der eingeklappten Stellung weitestgehend senkrecht zur Ebene des Ringelementes 3 stehen. Beim Ausführungsbeispiel sind jeweils drei Lamellen durch einen Bügel 21 zusammengefaßt. Deshalb schließen sich an die horizontalen Bügelabschnitte 22 schräg nach unten verlaufende Abschnitte 23 an, deren Abstand sich zum Ringelement 3 hin verringert. Die Länge der horizontalen Bügelabschnitte 22 zwischen den schrägen Bügelabschnitten 23 entspricht etwa der maximalen Breite der

- 12 -

Lamellen 15, die sich somit übereinanderschieben müssen, wenn sie durch die Bügel 21 hindurchgezogen werden, wenn sich der Ring 20, der über den U-Bügel 13 mit der Strebe 7 verbunden ist, gegenüber dem Ringelement 3 absenkt. In entgegengesetzter Bewegungsrichtung, wenn sich also der Ring 20 mit den daran befestigten Lamellen 15 wieder anhebt, bis er etwa in der Ebene des Ringelementes 3 oder geringfügig darüber liegt, wie es Figur 5 zeigt, werden die Lamellen 15 in Spreizrichtung wieder auseinandergedrückt, was im wesentlichen durch die Federn 40 auf dem Ring 20 bewirkt wird, aber noch zusätzlich durch weitere Führungen gefördert werden kann.

Die Bügel besitzen Vertikalabschnitte 24, die durch das Ringelement 3 hindurchgeführt sind. Damit die Bügel 21 sich nicht nach oben aus dem Ringelement 3 herausheben, besitzen sie unterseitig des Ringelementes 3 Abkröpfungen 25 als Sicherungen. Auf den vertikalen Abschnitten 24 der Bügel 21 sitzen in Gestalt von Schraubenfedern federnde Stützelemente 26, die sich unterseitig auf dem Ringelement 3 abstützen und oberseitig einzeln oder zu mehreren jeweils eine Lasche 26 tragen, die als Auflager für die Lamellen 15 in gespreizter Anordnung dient. Werden die Lamellen aus der in Figur 5 gezeigten Lage über ihre Außenenden nach unten gedrückt, stützen sie sich federnd auf den Laschen 26 ab, wobei die Federkraft der federnden Stützelemente 16 entsprechend dem Gewicht des zu transportierenden Kindes bemessen ist. Es sind also die Lamellen 15 nach unten hin nur gegen die Kraft der federnden Stützelemente 16 belastbar, soweit es ihren nach außen über die Laschen 26 überkragenden Teil betrifft, wodurch der wesentliche Anteil der Federung des die Sitzfläche bildenden Fächers 14 aufgebracht wird. Wie schon erwähnt, ist aber auch das Zentrum des Fächers 14 über das Federelement 12, das mit den teleskopischen Teilen 10 und 11 der Strebe 7 zusammenwirkt, federnd aufgelagert. Damit ist die gesamte durch den Lamellenfächer 14 gebildete Sitzfläche des Kinderwagengestells gegenüber dem Fahrwerk abgefedert.

In anderer im Ausführungsbeispiel nicht dargestellter Ausführung können auch die Lamellen 15 des Fächers 14 selbst federnd ausgebildet sein, um die gewünschte Federung des Sitzes zu erreichen. Vorteilhaft ist hierfür stets, daß der Durchmesser des Ringelementes 3 erheblich kleiner als der Durchmesser des Lamellenfächers 14 ist. Damit ergibt sich immer ein ausreichender Überstand der einzelnen Lamellen 15 über die Oberseite des Ringelementes 3 nach außen hinaus, wodurch insgesamt die Federungseigenschaften verbessert werden. Der Lamellenfächer 14 hat eine Halb- oder etwa Zweidrittel-Kreisform in gespreizter, horizontaler Anordnung, wodurch sich eine angenehme, dem Gesäß des Kindes angepaßte Sitzfläche ergibt. Dabei liegt die gerundete Begrenzung des Fächers 14 nach hinten, damit das Kind bequem mit abgewinkelten Beinen auf der Sitzfläche sitzen kann. Die zur Verkleidung des Fächers 14 erforderliche Bespannung ist in den Figuren im einzelnen nicht dargestellt.

Wie man in Figur 1 noch erkennt, ist auch eine Verdrehsicherung für den Sitzfächer 14 vorgesehen.

Diese besteht aus einer Querlasche 38, welche fest auf die Strebe 7 aufgesetzt ist und sich an den Stützstreben 4 des Ringelementes 3 abstützt, jedoch gegenüber diesen längsverschieblich ist.

Damit das schirmartige Auf- und Zusammenklappen des Fahrgestells weiter erleichtert wird, wozu zum einen schon die unterseitig an der Strebe 7 angeordnete Öse 9 dient, ist an der Führungshülse 5 noch ein Handgriff 41 angeordnet, der es ermöglicht, beim Niederhalten der Öse 9 mit dem Fuß die Führungshülse 5 mit dem Ringelement 3 nach oben über den Fächer 14 zu schieben. Wie schon erläutert, werden dabei über das Ringelement 3 die Stützen 1 mit ihren Oberenden mitgenommen, die sich infolge der Kopplung über die Spreizstreben 17 mit der festgehaltenen zentralen Strebe 7 einklappen.

Am radialen, ringartigen Vorsprung 8 der Strebe 7 sind ferner diametral Griffstangen 27 angelenkt. Sie bestehen aus einer unteren Hälfte 28 und einer oberen Hälfte 29, die über ein Gelenk 31 derart miteinander verbunden sind, daß sich jeweils die obere Griffstangenhälfte 29 in Richtung des Pfeiles A nach Entsicherung abklappen läßt. Die jeweils untere Hälfte 28 der beiden Griffstangen 27 ist weiter noch über eine Bindung 30 mit der betreffenden rückwärtigen Stütze 1 an der jeweiligen Seite gelenkig verbunden. Diese Verbindung und die Länge des jeweiligen unteren Abschnittes der Griffstangenhälften 28 zu den Anlenkpunkten am Ring 8 der Strebe 7 hin sind auf die Kinematik der Streben 1 und der Spreizstreben 17 hin abgestimmt, damit sich die unteren Griffstangenhälften 28 in gleicher Weise wie die Streben 1 und die Stützstreben 17 in zusammengeklappter Anordnung etwa parallel zur zentralen Strebe 7 ausrichten können. Auch in der Gesamtlänge sind die unteren Griffstangenhälften 28 an die Länge der Stützstrebe 7 einschließlich des Bündels der Lamellen 15 in zusammengefalteter Anordnung angepaßt, damit sich kein Überstand über die zuvor schon definierte Gesamtlänge in der zusammengeklappten Lage ergibt. Desgleichen ist auch die Länge der oberen Griffstangenhälften 29 an diese Gesamtlänge angepaßt. So gibt also stets die Strebe 7 mit dem koaxial dazu ausgerichteten Bündel der Lamellen 15 die Gesamtlänge des zusammengefalteten Kinderwagengestells vor, die man durch die getroffene Konstruktion leicht auf 60 cm begrenzen kann, so daß man das zusammengefaltete Gestell zum einen raumsparend in einer Hülle beispielsweise aus Segeltuchmaterial unterbringen kann und zum anderen die Maße für das Handgepäck bei Flugreisen beispielsweise nicht überschritten werden.

In ausgeklappter Stellung sind die Griffstangen 27 im wesentlichen schräg nach rückwärts und nach oben geneigt, damit die Bedienungsperson den Kinderwagen leicht vor sich herschieben kann, ohne mit dem Fahrwerk des Kinderwagens in Konflikt zu kommen. Außerdem ist eine solche Neigung für die Anbringung einer Rückenlehne vorteilhaft, die bei dem in der Zeichnung dargestellten Kinderwagengestell an den jeweils die Griffstangenhälften 28 und 29 verbindenden Gelenk 31 angebracht ist. Das ermöglicht es, zusammen mit den äußeren Griffstangenhälften 28 die Rückenlehne nach hinten über gegen die jeweils unteren Griffstangenhälften 28 raumsparend zu klappen.

Wie im einzelnen die Figuren 1 und 2 zeigen, ist die Rückenlehne an einer gelenkigen Querstrebe 32 angeordnet, die zwischen den Griffstangen 27 liegt und ein mittiges Gelenk 33 besitzt. Die gelenkige Querstrebe 32 kann also nach oben eingeknickt werden, sie dient also zugleich auch dazu, die beiden Griffstangen 27 quer zur Fahrtrichtung zusammenzulegen, entsprechend elastisch sind die Bindungen 30 zu den Stützen 1 hin ausgebildet. An ihren Enden besitzt die gelenkige Querstrebe 32 die Griffstangen 27 umfassende Krallen 42, die die einander überlappenden oberen Griffstangenhälften 29 und die unteren Griffstangenhälften 28 in der ausgeklappten Stellung übergreifen und gegeneinander verspannen. Es kann daher die obere Griffstangenhälfte 29 jeweils erst gegen die zugehörige untere Griffstangenhälfte 28 geklappt werden, wenn die gelenkige Querstrebe 32 nach oben hin so weit eingeknickt ist, daß die seitlichen Krallen 42 die beiden Stangenhälften 28 und 29 im Bereich des sie verbindenden Gelenkes 31 freigeben. Die Gelenke 31 und damit die Unterteilung der Griffstangen 27 liegen - anders als dargestellt - bevorzugt etwa in Höhe der Sitzfläche etwas oberhalb des Ringelementes 3.

Die Rückenlehne besteht nun im einzelnen aus an der Querstrebe 32 angeordneten Lamellen 34 und 35. Die mittige Lamelle 34 ist an ihrem Unterende etwa U-förmig abgekantet und mit ihrer rückwartig in der ausgeklappten Stellung liegenden Abkantung an der Querstrebe 32 im Bereich deren mittigen Gelenks 33 befestigt. Die mittige Lamelle 34 besteht aus einem federelastischen Material, damit sich eine Federung für die Rückenlehne des Kinderwagens ergibt. Die Federung der mittigen
Lamelle 34 wird durch die U-förmige Abkantung noch
erhöht. An der Lamelle 34 sind nahe deren Unterende noch zwei weitere Lamellen 35 spiegelbildlich
zueinander gelagert, die mit ihren Oberenden von
der mittigen Lamelle 34 abgespreizt werden können.
Zweckmässig erfolgt die Lagerung und Ausbildung
der weiteren Lamellen 35 derart, daß sich diese
unter Schwerkrafteinwirkung bei Aufrichtung der
Rückenlehne von der mittigen Lamelle 34 abspreizen.
Es versteht sich, daß die Lamellen 34 und 35
ebenso wie die Lamellen 15 des Sitzfächers 14
durch eine Bespannung verkleidet sind. Diese Bespannung kann mit derjenigen des Sitzfächers 14
verbunden sein. Damit die Lamellen 34 und 35,
welche die Rückenlehne des Gestells bilden, nicht
nach hinten in ausgeklappter Stellung wegklappen
können, sind zwischen den Griffstangen 27 noch
zwei weitere Gelenkstreben 36 angeordnet, die unter der mittigen Lamelle 34 ein Gelenk zum Einknicken nach oben hin besitzen. Diese zusätzlichen
Gelenkstreben 36 behindern also das Zusammenlegen
der Griffstangen 27 aufeinander nicht. Ebenso wie
die oberen Hälften 29 der Griffstangen 27 kann aber
nach Entsicherung durch die Querstrebe 32 die gesamte Rückenlehne mit den Lamellen 34 und 35 in
Richtung des Pfeiles Q in Figur 2 nach hinten weggeschwenkt werden.

An den oberen Hälften 29 der Griffstangen 27 können
ferner noch Armlehnen 37 schwenkbar angeordnet
sein, die sich in Richtung des Pfeiles B in
Figur 2 zu den Griffenden der oberen Griffstangenhälften 29 hinklappen lassen. Sowohl die Lamellen
34 und 35 als auch die übrigen Teile der Rückenlehne und die Armlehnen 37 sind in zusammengeklappter Anordnung derart an den Griffstangenhälften 28 und 29 gehalten, daß sie nicht über die durch die Strebe 7 einschließlich des Bündels der Lamellen 15 vorgegebene Gesamtlänge vorstehen. Trotz federnder Ausbildung nicht nur der Sitzfläche sondern auch der Rückenlehne des Kinderwagengestells wird also eine besonders kompakte Faltbarkeit nicht beeinträchtigt.

Die wesentliche Verbesserung des vorbeschriebenen Kinderwagens ist in der gefederten Sitzfläche zu sehen, die durch den Lamellenfächer 14 gebildet ist. Dabei wird die Federung des Lamellenfächers 14 vorwiegend von den federnden Stützelementen 16 aufgebracht, die oberseitig auf dem Ringelement 3 des Fahrgestells angeordnet sind. Die damit verbundenen Vorzüge für den Sitzkomfort lassen sich jedoch ohne weiteres auf einen Faltsitz übertragen, der sich von dem oben beschriebenen Kinderwagen nur insoweit unterscheidet, als die Griffstangen 27 weggelassen sind. Sofern man einen rollenden Faltsitz vorsieht, können an den Stützen 1 die Räder 2 belassen werden, wünscht man einen feststehenden Sitz, können auch die Räder 2 noch weggelassen werden.

Auf jeden Fall hat ein solcher Faltsitz dieselben Merkmale, wie sie zuvor schon im Zusammenhang mit dem Sitz des Faltkinderwagens beschrieben worden sind. Er besteht also im wesentlichen aus den Stützen 1 mit dem oberseitigen Ringelement 3, zu dem koaxial die Strebe 7 angeordnet ist, welche in der Führungshülse 5 geführt ist. Die Stützen 1 sind auch bei dem Faltsitz über die Spreizstreben 17 mit dem Unterende der Strebe 7 vorzugsweise über einen radialen Vorsprung 8 verbunden. Dieser Vorsprung 8 dient zugleich als Anschlag, der die Strebe 7 unterseitig am Stirnende der Führungshülse 5 abstützt, sofern die Stützen 1 durch Belasten der Sitzfläche gespreizt werden. Die einzelnen Lamellen 15 des Fächers 14 sind auch bei dem Faltsitz in gleicher Weise mit dem Oberende der zentralen Strebe 7 wie bei dem oben beschriebenen Faltkinderwagen verbunden. Insbesondere findet sich auch hier eine federnde Abstützung der Lamellen 15 durch die auf der Oberseite des Ringelementes 3 angeordneten federnden Stützelemente 16.

Der Faltsitz bildet nicht nur einen erhöhten Sitzkomfort durch die gefederte Sitzfläche, die ebenso wie bei dem Faltkinderwagen durch das Gestell selbst gebildet wird und vor allem auch eine ausreichende Festigkeit besitzt. Vielmehr ist der Faltsitz ebenfalls raumsparend zusammenlegbar, was für Campingzwecke oder dergleichen von besonderem Vorteil ist.

Patentansprüche:

1. Faltsitz mit einem zusammenklappbaren Gestell, das im wesentlichen aus vier gelenkig verbundenen Stützen besteht, wobei die Stützen in zusammengeklappter Stellung etwa parallel nebeneinander liegen und in ausgeklappter Lage etwa längs der Kanten eines Pyramidenstumpfes verlaufen, dadurch gekennzeichnet, daß die Stützen (1) mit ihren Oberenden an einem zentralen Ringelement (3) angelenkt sowie über Spreizstangen (17) mit einer koaxial zum Ringelement (3) angeordneten Strebe (7) an oder nahe deren Unterende verbunden sind und am Oberende der Strebe (7) ein Fächer (14) aus federnden und/oder gefederten Lamellen (15) mit seinem Spreizzentrum angelenkt ist, wobei in ausgeklappter Lage der Fächer (14) etwa parallel zur Ebene des Ringelementes (3) gespreizt ist und sich seine Lamellen (15) auf dem Ringelement (3) abstützen und in zusammengeklappter Lage die Lamellen (15) des Fächers (14) durch das Ringelement (3) hindurchgezogen und davon in einer zur Ebene des Ringelementes (3) etwa senkrechten Stellung gebündelt gehalten sind.

2. Faltsitz nach Anspruch 1, dadurch gekennzeichnet, daß das Ringelement (3) an seiner Oberseite federnde Stützelemente (16) für die Lamellen (15) des Fächers (14) besitzt.

3. Faltsitz nach Anspruch 2, dadurch gekennzeichnet, daß die federnden Stützelemente (16) als Druckfedern mit zumindest einer deren Oberseite
übergreifenden Stützlasche (26) ausgebildet
sind.

4. Faltsitz nach einem der Ansprüche 1 bis 3,
dadurch gekennzeichnet, daß die Strebe (7)
an ihrem Oberende einen zum Ringelement (3)
parallelen Ring (20) trägt, auf dem die Lamellen
(15) mit ihrem Innenende aufgereiht und auf
dem Spreizfedern (40) für die Lamellen (15) angeordnet sind.

5. Faltsitz nach einem der Ansprüche 1 bis 4, dadurch gekennzeichnet, daß die Lamellen (15) des
Fächers (14) auf der Strebe (7) federnd aufgelagert sind.

6. Faltsitz nach Anspruch 5, dadurch gekennzeichnet,
daß die Strebe (7) teleskopisch ausgebildet ist,
wobei die Lamellen (15) mit dem inneren Teleskopteil (11) verbunden sind, das sich über ein
Federelement (12) auf dem äußeren Teleskopteil (10) abstützt.

7. Faltsitz nach einem der Ansprüche 4 bis 6,
dadurch gekennzeichnet, daß der Ring (20), an
dem die Innenenden der Lamellen (15) befestigt
sind, auf einem U-Bügel (13) sitzt, der an das
Oberende des inneren Teleskopteils (11) der
Strebe (7) angesetzt ist, wobei das Federelement
(16) als Druckfeder zwischen dem U-Bügel (13)
und der oberen Stirnseite des äußeren Teleskopteils (10) auf dem inneren Teleskopteil (11)
der Strebe (7) angeordnet ist.

8. Faltsitz nach einem der Ansprüche 1 bis 7, dadurch gekennzeichnet, daß die Strebe (7) in
einer dagegen verschieblichen Führungshülse
(5) angeordnet ist, die mit dem Ringelement (3)
fest verbunden ist.

9. Faltsitz nach Anspruch 8, dadurch gekennzeichnet,
daß an der Strebe (7) ein radialer Vorsprung (8)
angeordnet ist, der in ausgeklappter Lage an
das Unterende der Führungshülse (5) anschlägt.

10. Faltsitz nach Anspruch 9, dadurch gekennzeichnet,
daß an dem radialen Vorspung (8) der Strebe (7)
die Spreizstangen (17) der Stützen (1) angelenkt
sind.

11. Faltsitz nach Anspruch 9 oder 10 für einen Faltkinderwagen, dadurch gekennzeichnet, daß am
oder nahe dem Unterende der Strebe (7) oder an
deren radialem Vorspung (8) Griffstangen (27)
angelenkt sind, die über gelenkige Bindungen
(30) mit den beiden rückwärtigen Stützen (1)
verbunden sind.

12. Faltsitz nach einem der Ansprüche 1 bis 11,
dadurch gekennzeichnet, daß die Länge der Stützen
(1) und/oder die Länge von Abschnitten (28, 29),
in die die Griffstangen (27) unterteilt sind,
gleich oder etwa gleich der Länge der Strebe
(7) zuzüglich der Länge des zusammengefalteten
Fächers (14) ist.

13. Faltsitz für einen Faltkinderwagen nach einem
der Ansprüche 11 oder 12, dadurch gekennzeichnet,
daß zwischen den Griffstangen (27) eine umklappbare Rückenlehne (34, 35) angeordnet ist, die
in zusammengeklappter Stellung innerhalb der
Länge der Strebe (7) einschließlich des Fächers

- 4 -    **0043087**

liegt, wobei die Rückenlehne (34, 35) aus
spreizbaren, in ungespreizter Lage etwa deckungsgleich aufeinanderliegenden Lamellen besteht.

Fig.1

Fig.2

Fig.3

0043087

Fig. 4

Fig.5

Fig.6